Europäisches Patentamt

European Patent Office

Office européen des brevets

(19)

(11) Numéro de publication: **0 332 493**
**A1**

(12) # DEMANDE DE BREVET EUROPEEN

(21) Numéro de dépôt: **89400503.2**

(22) Date de dépôt: **23.02.89**

(51) Int. Cl.⁴: **G 06 K 19/02**

(30) Priorité: **26.02.88 FR 8802352**

(43) Date de publication de la demande:
**13.09.89 Bulletin 89/37**

(84) Etats contractants désignés: **DE ES GB IT NL**

(71) Demandeur: **GEMPLUS CARD INTERNATIONAL**
**15 avenue Camille Pelletan**
**F-13090 Aix en Provence (FR)**

(72) Inventeur: **Brisson, Pierre**
**Cabinet Ballot-Schmit 84, Avenue Kléber**
**F-75116 Paris (FR)**

(74) Mandataire: **Ballot, Paul Denis Jacques**
**Cabinet Ballot-Schmit 84, avenue Kléber**
**F-75116 Paris (FR)**

(54) Procédé d'un ancartage pour cartes à puces.

(57) La présente invention concerne l'encartage des composants qui sont destinés à constituer la partie active de cartes dites "à puces".

Pour améliorer la tenue à l'arrachage des puces de circuit-intégré logées dans des cartes à puces flexibles, on propose le procédé de fabrication suivant:

On réalise d'abord une carte possédant une cavité dont les bords au moins sont constitués par un matériau présentant des propriétés de mémoire de forme, la forme initiale de la cavité à température ordinaire étant celle d'une cuvette ayant un fond et des bords surplombant partiellement le fond, avec des dimensions permettant de loger un micromodule de circuit-intégré, mais les bords en surplomb de la cavité ne permettant pas à un tel micromodule de sortir de la cavité ou d'y être introduit; puis on déforme plastiquement la carte pour repousser les bords en surplomb d'une distance suffisante pour permettre l'insertion d'un micromodule; on insère ensuite, dans la carte ainsi déformée plastiquement, un micromodule de circuit-intégré; enfin on porte la carte à une température pour laquelle se manifeste un effet de mémoire de forme par lequel les bords de la cavité, déformés plastiquement, redeviennent élastiques et reprennent la forme qu'ils avaient initialement en surplomb.

EP 0 332 493 A1

**Description**

## PROCEDE D'ENCARTAGE POUR CARTES A PUCES

La présente invention concerne l'encartage des composants qui sont destinés à constituer la partie active de cartes dites "à puces".

Les cartes à puces qui sont le plus souvent au format de cartes de crédit de quelques centimètres de côté sur un ou deux millimètres d'épaisseur sont le plus souvent fabriquées de la manière suivante : on part d'une puce de circuit-intégré que l'on soude à un petit circuit-imprimé constitué par une pellicule isolante (en polyimide par exemple) revêtue de conducteurs gravés; la puce est soudée par sa face arrière sur une zone conductrice du circuit-imprimé et des fils de liaison sont soudés entre des plots de la puce et d'autres zones conductrices du circuit-imprimé; puis on enrobe la puce et le circuit-imprimé avec une résine isolante de protection thermoplastique (résine époxy) en laissant dépasser des plages conductrices qui serviront ultérieurement de contacts d'accès au circuit-intégré lorsqu'il sera incorporé à une carte; on constitue ainsi ce qu'on appelle un micromodule contenant une puce de circuit-intégré et ses contacts d'accès. C'est ce micromodule qui doit être encarté dans une carte au format carte de crédit.

L'opération d'encartage consiste à placer le micromodule dans une cavité qui a été formée dans une carte de matière plastique (chlorure de polyvinyle) puis à faire adhérer la matière plastique de la carte avec la résine thermoplastique enrobant le micromodule, par exemple avec un point de colle entre les deux. Le micromodule devient solidaire de la carte et le montage est terminé.

On a constaté cependant que l'adhérence n'est pas aussi durable qu'on le souhaiterait. Cela est vrai spécialement pour les cartes qui sont destinées à un usage intensif par le grand public. Les cartes destinées au grand public sont en effet souvent soumises à des manipulations sans grandes précautions et il arrive qu'elles subissent des contraintes exagérées de torsion, flexion, etc. Comme en outre le public souhaite que ces cartes soient aussi peu encombrantes que possibles et de préférence aussi plates que possible pour pouvoir être facilement glissées dans un portefeuille, il est encore plus difficile que les cartes puissent résister à ces contraintes de flexion et torsion.

L'expérience montre que le micromodule de la carte à puces tend à se décoller par suite des flexions répétées de la carte, rendant celle-ci inutilisable du fait qu'elle ne peut plus être introduite convenablement dans les lecteurs de cartes.

C'est pourquoi l'invention propose un nouveau procédé de fabrication de cartes qui non seulement a l'avantage d'améliorer la résistance aux contraintes, tout particulièrement la résistance au décollement du micromodule, mais encore qui est particulièrement commode d'utilisation.

Selon l'invention, on propose un procédé de montage de micromodules de circuit-intégré dans des cartes à puces, ce procédé étant caractérisé en ce que l'on réalise d'abord une carte possédant une cavité dont les bords au moins sont constitués par un matériau présentant des propriétés de mémoire de forme, la forme initiale de la cavité à température ordinaire étant celle d'une cuvette ayant un fond et ayant des bords surplombant partiellement le fond, et ayant des dimensions permettant de loger un micromodule de circuit-intégré, mais les bords en surplomb de la cavité ne permettant pas à un tel micromodule de sortir de la cavité ou d'y être introduit; puis on déforme plastiquement la carte pour repousser les bords en surplomb d'une distance suffisante pour permettre l'insertion d'un micromodule; on insère ensuite, dans la carte ainsi déformée plastiquement, un micromodule de circuit-intégré; enfin on porte la carte à une température pour laquelle se manifeste un effet de mémoire de forme par lequel les bords de la cavité, déformés plastiquement, redeviennent élastiques et reprennent la forme qu'ils avaient initialement en surplomb.

Par propriétés de mémoire de forme, on entend une propriété de certains matériaux, plus particulièrement certains alliages métalliques tels que l'alliage de nickel et de titane, mais aussi des matières organiques synthétiques, de pouvoir être déformés au delà de leur limite d'élasticité, leur déformation devenant plastique, donc permanente, mais de retrouver leur forme initiale par chauffage ou refroidissement, exactement comme si la déformation n'avait pas dépassé la limite d'élasticité.

On voit l'avantage que l'on peut obtenir dans la fabrication de cartes à puces dans le contexte qui a été indiqué ci-dessus : on peut enfermer la puce par des bords en surplomb, ce qui n'était pas fait jusqu'à présent, et par conséquent on améliore nettement la tenue du micromodule à l'arrachage ou au décollement en présence de contraintes de flexion ou de torsion de la carte. D'autre part, la fermeture de la cavité par des bords venant en surplomb se fait par une procédure très simple puisque c'est une simple opération de chauffage ou refroidissement.

Si le matériau à mémoire de forme utilisé est électriquement isolant, il pourra être utilisé tel quel pour former les bords de la cavité. S'il est conducteur ou insuffisamment isolant, il sera préférable de recouvrir les bords de la cavité et éventuellement le fond d'une pellicule de résine thermoplastique juste avant l'introduction du micromodule (mais après la déformation plastique imposée aux bords de la cavité); cette pellicule épousera la forme des bords de la cavité aussi bien pendant qu'ils sont déformés plastiquement que lorsqu'ils reviendront élastiquement à leur position première en surplomb. On évitera ainsi que les contacts d'accès du micromodule ne soient court-circuités par les surplombs.

**Revendications**

Procédé de montage de micromodules de circuit-intégré dans des cartes à puces, ce procédé étant caractérisé en ce que l'on réalise d'abord une carte possédant une cavité dont les bords au moins sont constitués par un matériau présentant des propriétés de mémoire de forme, la forme initiale de la cavité à température ordinaire étant celle d'une cuvette ayant un fond et ayant des bords surplombant partiellement le fond, et ayant des dimensions permettant de loger un micromodule de circuit-intégré, mais les bords en surplomb de la cavité ne permettant pas à un tel micromodule de sortir de la cavité ou d'y être introduit; puis on déforme plastiquement la carte pour repousser les bords en surplomb d'une distance suffisante pour permettre l'insertion d'un micromodule; on insère ensuite, dans la carte ainsi déformée plastiquement, un micromodule de circuit-intégré; enfin on porte la carte à une température pour laquelle se manifeste un effet de mémoire de forme par lequel les bords de la cavité, déformés plastiquement, redeviennent élastiques et reprennent la forme qu'ils avaient initialement en surplomb.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,A | PATENT ABSTRACTS OF JAPAN vol. 12, no. 203 (P-715)(3050), 11 juin 1988; & JP - A - 63 4469 (OMRON TATEISI ELECTRONICS CO) 09-01-1988 | 1 | G 06 K  19/02 |
| A | idem<br>----- | 1 | |
| | | | **DOMAINES TECHNIQUES RECHERCHES (Int. Cl.4)**<br><br>G 06 K  19/00 |

Le présent rapport a été établi pour toutes les revendications

| Lieu de la recherche | Date d'achèvement de la recherche | Examinateur |
|---|---|---|
| BERLIN | 10-05-1989 | ZOPF K |

EPO FORM 1503 03.82 (P0402)